# EUROPÄISCHE PATENTANMELDUNG

(11) **EP 3 583 846 A1**
(43) Veröffentlichungstag der Anmeldung: **25.12.2019**
(21) Anmeldenummer: 19401019.5
(22) Anmeldetag: 17.05.2019
(51) Int. Cl.: A01M 7/00

(54) **AUSBRINGSYSTEM FÜR EIN LANDWIRTSCHAFTLICHES GERÄT**

(30) Priorität: 19.06.2018 DE 102018114669
(71) Anmelder: Amazonen-Werke H. Dreyer GmbH & Co. KG, 49205 Hasbergen (DE)
(72) Erfinder: Austermann, Stefan, 48291 Telgte (DE); Resch, Rainer, 49170 Hagen a TW (DE)

(57) **Zusammenfassung**

Die Erfindung betrifft ein Ausbringsystem für ein landwirtschaftliches Gerät zur Ausbringung von Flüssigkeiten, insbesondere für eine landwirtschaftliche Feldspritze, mit einem Verteilergestänge, mehreren Ausbringeinrichtungen, welche jeweils an dem Verteilergestänge angeordnet und dazu eingerichtet sind, Flüssigkeit auf eine landwirtschaftliche Nutzfläche auszubringen, mehreren Erfassungseinrichtungen, welche dazu eingerichtet sind, Zustandsinformationen zu der landwirtschaftlichen Nutzfläche zu erfassen, und einer Steuerungseinrichtung, welche dazu eingerichtet ist, die Ausbringung der Flüssigkeit durch die Ausbringeinrichtungen in Abhängigkeit der durch die Erfassungseinrichtungen erfassten Zustandsinformationen zu der landwirtschaftlichen Nutzfläche zu steuern, wobei die Ausbringeinrichtungen dazu eingerichtet sind, die Flüssigkeit schräg nach unten abzugeben.

## Beschreibung

Die Erfindung betrifft ein Ausbringsystem für ein landwirtschaftliches Gerät nach dem Oberbegriff des Patentanspruchs 1 und ein landwirtschaftliches Gerät nach dem Oberbegriff des Patentanspruchs 14.

Landwirtschaftliche Geräte zur Ausbringung von Flüssigkeiten, wie beispielsweise landwirtschaftliche Feldspritzen, verfügen üblicherweise über ein Verteilergestänge, an welchem mehrere Ausbringeinrichtungen angeordnet sind. Die Ausbringeinrichtungen dienen dabei zum Ausbringen von Flüssigkeiten, wie beispielsweise Pflanzenschutzmittel oder Flüssigdünger, auf landwirtschaftliche Nutzflächen.

Aus den Druckschriften US 2003/0019949 A1 und DE 10 2007 036 870 B4 sind entsprechende Ausbringsysteme bekannt, bei welchen der Anstellwinkel der Ausbringeinrichtungen veränderbar ist. Hierdurch kann beispielsweise der sich in Längsrichtung ergebende Abdrift der ausgebrachten Flüssigkeit ausgeglichen werden, sodass die Flüssigkeitstropfen im Wesentlichen senkrecht auf die landwirtschaftliche Nutzfläche auftreffen. Hierdurch soll eine gleichmäßige Verteilung der abgegebenen Flüssigkeit auf der landwirtschaftlichen Nutzfläche gewährleistet werden.

Andere bekannte landwirtschaftliche Geräte zur Ausbringung von Flüssigkeiten weisen Erfassungseinrichtungen auf, welche zum Erfassen von Zustandsinformationen zu der landwirtschaftlichen Nutzfläche dienen. Durch die Erfassung der Zustandsinformationen kann beispielsweise lokaler Unkrautbewuchs identifiziert werden. Mittels einer geeigneten Steuerungseinrichtung kann dann lokal Flüssigkeit, wie etwa Pflanzenschutzmittel, in dem entsprechenden Bereich ausgebracht werden.

Entsprechende Systeme weisen jedoch regelmäßig eine Ausbringträgheit auf, welche die maximale Fahrgeschwindigkeit bei der Ausbringung der Flüssigkeit in Abhängigkeit der erfassten Zustandsinformationen zu der landwirtschaftlichen Nutzfläche begrenzt. Aufgrund der notwendigen Berechnungszeiten für Steuersignale, der Dauer der Signalübertragung, der Schaltzeiten der Ausbringeinrichtungen und der Flugzeit des Spritzmittels muss die Erfassung der Zustandsinformationen zu der landwirtschaftlichen Nutzfläche derart frühzeitig erfolgen, dass eine entsprechend angepasste Ausbringung der Flüssigkeit noch umgesetzt werden kann. Mit zunehmender Fahrgeschwindigkeit sinkt folglich die zur Verfügung stehende freie Reaktionszeit für das Ausbringsystem, durch welche die Ausbringträgheit ausgeglichen werden kann.

Da die Ausbringträgheit entsprechender Ausbringsysteme nicht ohne Weiteres weiter verringert werden kann, ist somit zur weiteren Steigerung der Fahrgeschwindigkeit während eines Ausbringvorgangs die zur Verfügung stehende freie Reaktionszeit zum Umsetzen einer auf Basis von Zustandsinformationen zu der landwirtschaftlichen Nutzfläche gesteuerten Flüssigkeitsausbringung zu erhöhen.

Die der Erfindung zugrundeliegende Aufgabe ist es also, die maximale Fahrgeschwindigkeit von landwirtschaftlichen Geräten zur Ausbringung von Flüssigkeiten, bei welchen die Ausbringung der Flüssigkeiten in Abhängigkeit von erfassten Zustandsinformationen zu der landwirtschaftlichen Nutzfläche gesteuert wird, weiter zu erhöhen.

Die Aufgabe wird gelöst durch ein Ausbringsystem der eingangs genannten Art, wobei die Ausbringeinrichtungen dazu eingerichtet sind, die Flüssigkeit schräg nach unten abzugeben.

Die Erfindung macht sich die Erkenntnis zunutze, dass durch eine schräg nach unten gerichtete Flüssigkeitsabgabe der Auftreffbereich der Flüssigkeit auf die landwirtschaftliche Nutzfläche in Längsrichtung verändert werden kann, sodass der horizontale Abstand zwischen den Erfassungsbereichen der Erfassungseinrichtungen und den Ausbringbereichen der Ausbringeinrichtungen vergrößert wird. Aufgrund des vergrößerten horizontalen Abstands zwischen den Erfassungsbereichen und den Ausbringbereichen kann die Fahrgeschwindigkeit entsprechend erhöht werden. Trotz der erhöhten Fahrgeschwindigkeit steht aufgrund des vergrößerten Abstands zwischen den Erfassungsbereichen und den Ausbringbereichen eine ausreichend lange freie Reaktionszeit für das Ausbringsystem zur Verfügung, welche dessen Reaktionsträgheit bei der Anpassung der Ausbringung in Abhängigkeit von erfassten Zustandsinformationen zu der landwirtschaftlichen Nutzfläche ausgleichen kann.

Die Erfassungseinrichtungen sind vorzugsweise an dem Verteilergestänge angeordnet. Die Ausbringeinrichtungen können einen Neigungswinkel in einem Bereich von 10 bis 30° gegenüber einer quer zur Fahrtrichtung verlaufenden Vertikalen aufweisen, sodass die Ausbringeinrichtungen in Fahrtrichtung nach hinten schauen. Im Sinne der Erfindung erfolgt die Abgabe der Flüssigkeit schräg nach unten auch ohne Umgebungseinflüsse, welche beispielsweise durch eine Bewegung des Ausbringsystems, insbesondere durch einen Fahrtwind, hervorgerufen werden. Die erfassten Zustandsinformationen können Informationen über lokalen Unkraut- und/oder Wildbewuchs auf der landwirtschaftlichen Nutzfläche umfassen, sodass eine lokale Ausbringung der Flüssigkeit auf die erfassten Unkraut- und/oder Wildbewuchsbereiche erfolgen kann.

In einer bevorzugten Ausführungsform des erfindungsgemäßen Ausbringsystems weisen die Ausbringeinrichtungen jeweils einen Ausbringbereich und die Erfassungseinrichtungen jeweils einen Erfassungsbereich auf, wobei die Erfassungsbereiche in Fahrtrichtung vor den Ausbringbereichen angeordnet sind. Die Erfassungseinrichtungen können Sensoren, insbesondere optische Sensoren, sein oder Sensoren, insbesondere optische Sensoren, umfassen. Die Ausbringeinrichtungen können Spritzdüsen sein oder Spritzdüsen umfassen. Die Ausbringeinrichtungen können dazu eingerichtet sein, Pflanzenschutzmittel und/oder Flüssigdünger auszubringen.

In einer Weiterbildung des erfindungsgemäßen Ausbringsystems ist das Verteilergestänge dazu eingerichtet, sich im ordnungsgemäßen Betrieb quer zur Fahrtrichtung zu erstrecken, wobei die Erfassungseinrichtungen derart angeordnet und ausgebildet sind, dass die Erfassungsbereiche in Fahrtrichtung vor dem Verteilergestänge angeordnet sind. Alternativ können die Erfassungsbereiche auch teilweise oder vollständig unter dem Verteilergestänge angeordnet sein. Die Relativposition zwischen den Erfassungsbereichen der einzelnen Erfassungseinrichtungen und dem Verteilergestänge kann veränderbar sein. Beispielsweise kann die Neigung und/oder Position der Erfassungseinrichtungen in Bezug auf das Verteilergestänge veränderbar sein.

In einer weiteren bevorzugten Ausführungsform des erfindungsgemäßen Ausbringsystems ist das Verteilergestänge dazu eingerichtet, sich im ordnungsgemäßen Betrieb quer zur Fahrtrichtung zu erstrecken, wobei die Ausbringeinrichtungen derart angeordnet und ausgebildet sind, dass die Ausbringbereiche in Fahrtrichtung hinter dem Verteilergestänge angeordnet sind. Alternativ können die Ausbringbereiche auch teilweise oder vollständig unterhalb des Verteilergestänges angeordnet sein. Die Relativposition zwischen den Ausbringbereichen der einzelnen Ausbringeinrichtungen und dem Verteilergestänge kann veränderbar sein. Beispielsweise kann die Neigung und/oder Position der Ausbringeinrichtungen veränderbar sein.

In einer anderen vorteilhaften Weiterbildung des erfindungsgemäßen Ausbringsystems sind die Ausbringeinrichtungen schräg nach unten und vorzugsweise gegen die Fahrtrichtung nach hinten geneigt ausgerichtet. Durch die schräg nach unten und nach hinten geneigte Ausrichtung der Ausbringeinrichtungen ergeben sich Ausbringbereiche, welche in Fahrtrichtung hinter dem Verteilergestänge liegen. Auf diese Weise wird durch vergleichsweise einfache konstruktive Maßnahmen der horizontale Abstand zwischen den Erfassungsbereichen und den Ausbringbereichen weiter erhöht, wodurch eine weitere Steigerung der Fahrgeschwindigkeit umgesetzt werden kann.

Außerdem ist ein erfindungsgemäßes Ausbringsystem bevorzugt, bei welchem jeweils eine oder mehrere Ausbringeinrichtungen an einer Spritzleitung des Verteilergestänges ausgebildet sind, wobei eine oder mehrere Spritzleitungen derart ausgerichtet sind, dass die Ausbringeinrichtungen die Flüssigkeit schräg nach unten abgeben. Beispielsweise sind die Spritzleitungen nach hinten verdreht, sodass die Flüssigkeit schräg nach unten abgegeben wird. Auch diese einfache konstruktive Maßnahme erlaubt die Vergrößerung des horizontalen Abstands zwischen den Erfassungsbereichen und den Ausbringbereichen, wodurch wiederum höhere Fahrgeschwindigkeiten umsetzbar sind.

In einer besonders bevorzugten Ausführungsform des erfindungsgemäßen Ausbringsystems weisen die Ausbringeinrichtungen jeweils ein oder mehrere Mundstücke auf, wobei die Mundstücke jeweils derart geneigt ausgerichtet sind, dass die Ausbringeinrichtungen die Flüssigkeit schräg nach unten abgeben. Wenn die Ausbringeinrichtungen als Spritzdüsen ausgebildet sind oder Spritzdüsen umfassen, können die Mundstücke als Düsenmundstücke ausgebildet sein. Die Mundstücke können jeweils eine Hauptabgaberichtung für Flüssigkeit vorgeben, wobei die Hauptabgaberichtung für Flüssigkeit schräg nach unten und vorzugsweise gegen die Fahrtrichtung nach hinten geneigt ausgerichtet ist.

Außerdem ist ein erfindungsgemäßes Ausbringsystem bevorzugt, bei welchem die Erfassungseinrichtungen schräg nach unten und vorzugsweise in Fahrtrichtung nach vorne geneigt ausgerichtet sind. Dadurch, dass die Erfassungseinrichtungen schräg nach unten und vorzugsweise in Fahrtrichtung nach vorne geneigt ausgerichtet sind, ist der horizontale Abstand zwischen den Erfassungsbereichen der Erfassungseinrichtungen und den Ausbringbereichen der Ausbringeinrichtungen weiter vergrößert. Die Erfassungseinrichtungen können einen Neigungswinkel in einem Bereich von 10 bis 30° gegenüber einer quer zur Fahrtrichtung verlaufenden Vertikalen aufweisen, sodass diese in Fahrtrichtung nach vorne schauen.

Bevorzugt ist außerdem ein erfindungsgemäßes Ausbringsystem, welches eine Ausbringträgheit aufweist, welche die maximale Fahrgeschwindigkeit bei der Ausbringung der Flüssigkeit in Abhängigkeit der erfassten Zustandsinformationen zu der landwirtschaftlichen Nutzfläche begrenzt. Die Ausbringträgheit kann verursacht werden durch notwendige Berechnungszeiten für Steuersignale, die Dauer der Signalübertragung, die Schaltzeiten der Ausbringeinrichtungen und/oder die Flugzeit der abgegebenen Flüssigkeit. Die Abgabe der Flüssigkeit schräg nach unten führt zu einer Verlängerung der zur Verfügung stehenden Reaktionszeit für das Ausbringsystem bei der Ausbringung von Flüssigkeit in Abhängigkeit der erfassten Zustandsinformationen zu der landwirtschaftlichen Nutzfläche.

In einer anderen Ausführungsform weist das erfindungsgemäße Ausbringsystem eine Neigungsverstelleinrichtung auf, mittels welcher die Neigung der Ausbringeinrichtungen in Bezug auf das Verteilergestänge zum Verändern der jeweiligen Ausbringrichtungen veränderbar ist. Die Neigungsverstelleinrichtung kann dazu eingerichtet sein, eine oder mehrere Spritzleitungen zu verschwenken oder zu verdrehen. Die Neigungsverstelleinrichtung kann dazu eingerichtet sein, die Düsenmundstücke der Ausbringeinrichtungen zu verschwenken oder zu verdrehen. Das Ausbringsystem kann auch eine weitere Neigungsverstelleinrichtung aufweisen, mittels welcher die Neigung der Erfassungseinrichtungen in Bezug auf das Verteilergestänge zum Verändern der jeweiligen Erfassungsrichtungen veränderbar ist.

In einer Weiterbildung des erfindungsgemäßen Ausbringsystems weist dieses eine Positionsverstelleinrichtung auf, mittels welcher die Position der Ausbringeinrichtungen in Bezug auf das Verteilergestänge zum Verändern der Position der Ausbringbereiche der jeweiligen Ausbringeinrichtungen veränderbar ist. Das Ausbringsystem kann auch eine weitere Positionsverstelleinrichtung aufweisen, mittels welcher die Position der Erfassungseinrichtungen in Bezug auf das Verteilergestänge zum Verändern der Position der Erfassungsbereiche der jeweiligen Erfassungseinrichtungen veränderbar ist.

Außerdem ist ein erfindungsgemäßes Ausbringsystem bevorzugt, welches eine Abgabeverstelleinrichtung aufweist, mittels welcher die Ausbringrichtungen der jeweiligen Ausbringeinrichtungen ohne eine Verstellung der Neigung und/oder der Position der Ausbringeinrichtungen veränderbar ist. Das Ausbringsystem kann auch eine Erfassungsverstelleinrichtung aufweisen, mittels welcher die Erfassungsrichtungen der jeweiligen Erfassungseinrichtungen ohne eine Verstellung der Neigung und/oder der Position der Erfassungseinrichtungen veränderbar ist.

Darüber hinaus ist ein erfindungsgemäßes Ausbringsystem vorteilhaft, bei welchem die Steuerungseinrichtung dazu eingerichtet ist, auf Grundlage des Zustands der Ausbringeinrichtungen und/oder des Zustands der Erfassungseinrichtungen eine maximale Fahrgeschwindigkeit zu ermitteln und/oder ein Signal zur Begrenzung der Fahrgeschwindigkeit zu erzeugen. Der Zustand der Ausbringeinrichtungen kann beispielsweise die Neigung und/oder die Position der Ausbringeinrichtungen betreffen. Der Zustand der Erfassungseinrichtungen kann beispielsweise die Neigung und/oder Position der Erfassungseinrichtungen betreffen. Insbesondere ist die Steuerungseinrichtung dazu eingerichtet, den Abstand zwischen den Erfassungsbereichen und den Ausbringbereichen zu ermitteln und unter Berücksichtigung der Ausbringträgheit eine maximale Fahrgeschwindigkeit für den vorliegenden Abstand zwischen den Erfassungsbereichen und den Ausbringbereichen zu berechnen.

In einer Weiterbildung des erfindungsgemäßen Ausbringsystems ist die Steuerungseinrichtung dazu eingerichtet, auf Grundlage einer Fahrgeschwindigkeit, insbesondere der aktuellen Fahrgeschwindigkeit, einen geeigneten Zustand für die Ausbringeinrichtungen und/oder einen geeigneten Zustand für die Erfassungseinrichtungen zu ermitteln und vorzugsweise ein Signal zur Einstellung des ermittelten Zustands an den Ausbringeinrichtungen und/oder ein Signal zur Einstellung des ermittelten Zustands an den Erfassungseinrichtungen zu erzeugen. Der Zustand der Ausbringeinrichtungen kann beispielsweise die Neigung und/oder die Position der Ausbringeinrichtungen betreffen. Der Zustand der Erfassungseinrichtungen kann beispielsweise die Neigung und/oder die Position der Erfassungseinrichtungen betreffen.

Die der Erfindung zugrundeliegende Aufgabe wird ferner durch ein landwirtschaftliches Gerät der eingangs genannten Art gelöst, wobei das Ausbringsystem des erfindungsgemäßen landwirtschaftlichen Geräts nach einer der vorstehend beschriebenen Ausführungsformen ausgebildet ist. Hinsichtlich der Vorteile und Modifikationen des erfindungsgemäßen landwirtschaftlichen Geräts wird auf die Vorteile und Modifikationen des erfindungsgemäßen Ausbringsystems verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Gerätekombination mit einem Zugfahrzeug und einem erfindungsgemäßen landwirtschaftlichen Gerät zur Ausbringung von Flüssigkeiten in einer perspektivischen Darstellung; und
- Fig. 2: ein Ausführungsbeispiel eines erfindungsgemäßen Geräts zur Ausbringung von Flüssigkeiten in einer Seitenansicht.

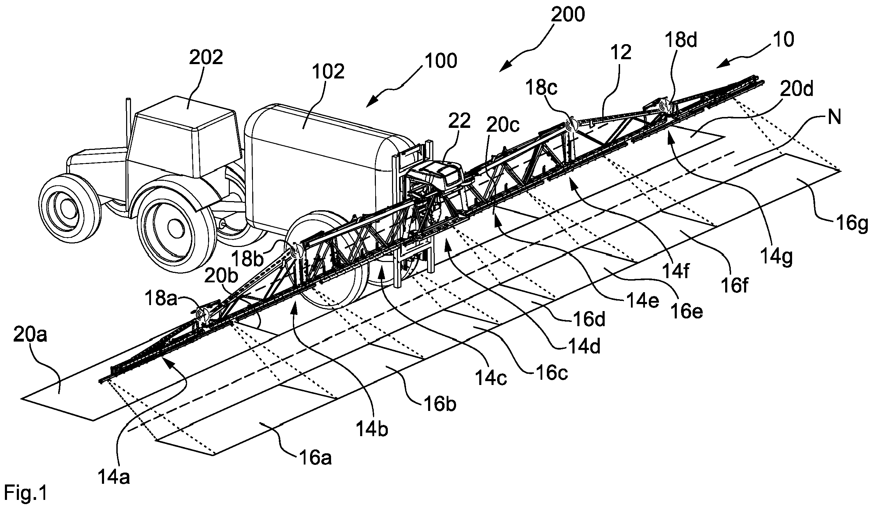

Gemäß Fig. 1 umfasst die Gerätekombination 200 ein als Traktor ausgebildetes Zugfahrzeug 202 und ein als Feldspritze ausgebildetes landwirtschaftliches Gerät 100 zur Ausbringung von Flüssigkeiten. Mit dem Gerät 100 kann beispielsweise Pflanzenschutzmittel oder Flüssigdünger auf eine einen Pflanzenbestand P aufweisende landwirtschaftliche Nutzfläche N ausgebracht werden.

In der dargestellten Ausführungsform ist das Gerät 100 als Anhängespritze ausgebildet. Alternativ kann das Gerät 100 jedoch auch als Anbau-, Aufbau- oder selbstfahrende Spritze ausgebildet sein.

Das Gerät 100 weist einen Vorratstank 102 und ein Ausbringsystem 10 auf. Der Vorratstank 102 dient zum Bevorraten der auszubringenden Flüssigkeit. Das Ausbringsystem 10 weist mehrere als Spritzdüsen ausgebildete Ausbringeinrichtungen 14a-14g auf, welche fluidleitend mit dem Vorratstank 102 verbunden sind und zum Ausbringen der Flüssigkeit auf die landwirtschaftliche Nutzfläche N dienen.

Das Gerät 100 weist außerdem ein Verteilergestänge 12 auf, welches sich im ordnungsgemäßen Betrieb quer zur Fahrtrichtung erstreckt. Das Verteilergestänge 12 weist eine linke und eine rechte Gestängeseite auf, wobei die linke und die rechte Gestängeseite jeweils mehrere zueinander klappbare Gestängesegmente umfassen. Hierdurch kann das Verteilergestänge 12 für Straßenfahrten auf eine zulässige Straßentransportbreite eingeklappt werden. Die Ausbringeinrichtungen 14a-14g sind an dem Verteilergestänge 12 angeordnet.

Ferner umfasst das Gerät 100 mehrere als optische Sensoren ausgebildete Erfassungseinrichtungen 18a-18d, welche ebenfalls an dem Verteilergestänge 12 angeordnet sind und zum Erfassen von Zustandsinformationen zu der landwirtschaftlichen Nutzfläche N dienen. Die Zustandsinformationen können beispielsweise Informationen über lokalen Unkraut- und/oder Wildbewuchs umfassen, sodass eine lokale Ausbringung der Flüssigkeit auf entsprechende Bereiche erfolgen kann.

Die Ausbringeinrichtungen 14a-14g weisen jeweils einen Ausbringbereich 16a-16g und die Erfassungseinrichtungen 18a-18d jeweils einen Erfassungsbereich 20a-20d auf, wobei die Erfassungsbereiche 20a-20d in Fahrtrichtung vor den Ausbringbereichen 16a-16g angeordnet sind. Die Ausbringeinrichtungen 14a-14g sind derart angeordnet und ausgerichtet, dass die Ausbringbereiche 16a-16g in Fahrtrichtung hinter dem Verteilergestänge 12 angeordnet sind. Die Erfassungseinrichtungen 18a-18d sind derart angeordnet und ausgerichtet, dass die Erfassungsbereiche 20a-20d in Fahrtrichtung vor dem Verteilergestänge 12 angeordnet sind.

Das Gerät 100 umfasst darüber hinaus eine Steuerungseinrichtung 22, welche zum Steuern der Ausbringung der Flüssigkeit durch die Ausbringeinrichtungen 14a-14g in Abhängigkeit der durch die Erfassungseinrichtungen 18a-18d erfassten Zustandsinformationen zu der landwirtschaftlichen Nutzfläche N dient.

Das Ausbringsystem 10 weist eine Ausbringträgheit auf, welche die maximale Fahrgeschwindigkeit bei der Ausbringung der Flüssigkeit in Abhängigkeit der erfassten Zustandsinformationen zu der landwirtschaftlichen Nutzfläche N begrenzt. Die Ausbringträgheit wird durch die notwendigen Berechnungszeiten für Steuersignale, die Dauer der Signalübertragung, die Schaltzeiten der Ausbringeinrichtungen 14a-14g und die Flugzeit der abgegebenen Flüssigkeit verursacht.

Die Ausbringeinrichtungen 14a-14g sind dazu eingerichtet, die Flüssigkeit schräg nach unten abzugeben. Die Ausbringeinrichtungen 14a-14g sind nämlich schräg nach unten und gegen die Fahrtrichtung nach hinten geneigt ausgerichtet. Die Ausbringeinrichtungen 14a-14g können einen Neigungswinkel in einem Bereich von 10 bis 30 Grad gegenüber einer quer zur Fahrtrichtung verlaufenden Vertikalen aufweisen, sodass diese in Fahrtrichtung nach hinten schauen. Ferner sind die Erfassungseinrichtungen 18a-18d schräg nach unten und in Fahrtrichtung nach vorne geneigt ausgerichtet. Die Erfassungseinrichtungen 18a-18d können einen Neigungswinkel in einem Bereich von 10 bis 30 Grad gegenüber einer quer zur Fahrtrichtung verlaufenden Vertikalen aufweisen, sodass diese in Fahrtrichtung nach vorne schauen.

Dadurch, dass die Ausbringeinrichtungen 14a-14g in Fahrtrichtung nach hinten schauen und die Erfassungseinrichtungen 18a-18d in Fahrtrichtung nach vorne schauen, wird eine Verlängerung der zur Verfügung stehenden Reaktionszeit für das Ausbringsystem 10 bei der Ausbringung der Flüssigkeit in Abhängigkeit der erfassten Zustandsinformationen zu der landwirtschaftlichen Nutzfläche N erreicht. Dies erlaubt eine weitere Erhöhung der Fahrgeschwindigkeit während des Ausbringung der Flüssigkeit.

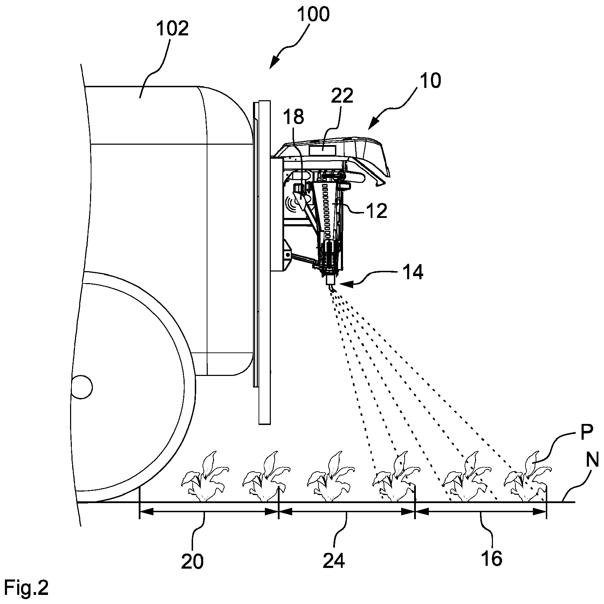

Die Fig. 2 zeigt, dass die Ausbringeinrichtungen 14 dazu eingerichtet sind, die Flüssigkeit schräg nach unten und in Fahrtrichtung nach hinten abzugeben. Die Ausbringeinrichtungen 14 sind hierzu schräg nach unten und gegen die Fahrtrichtung nach hinten geneigt ausgerichtet. Ferner sind die Erfassungseinrichtungen 18 schräg nach unten und in Fahrtrichtung nach vorne geneigt ausgerichtet.

Dadurch, dass die Ausbringeinrichtungen 14 dazu eingerichtet sind, die Flüssigkeit schräg nach unten abzugeben, und die Erfassungseinrichtungen 18 schräg nach unten und in Fahrtrichtung nach vorne geneigt ausgerichtet sind, ist der horizontale Abstand 24 zwischen den Erfassungsbereichen 20 der Erfassungseinrichtungen 18 und den Ausbringbereichen 16 der Ausbringeinrichtungen 14 vergrößert, wodurch höhere Fahrgeschwindigkeiten umgesetzt werden können.

Grundsätzlich können jeweils mehrere Ausbringeinrichtungen 14 an einer Spritzleitung des Verteilergestänges 12 ausgebildet sein, wobei die Spritzleitungen derart ausgerichtet sind, dass die Ausbringeinrichtungen 14 die Flüssigkeit schräg nach unten abgeben. Alternativ oder zusätzlich können die Ausbringeinrichtungen 14 jeweils ein oder mehrere Mundstücke aufweisen, wobei die Mundstücke jeweils derart geneigt ausgerichtet sind, dass die Ausbringeinrichtungen 14 die Flüssigkeit schräg nach unten abgeben.

Das Gerät 100 kann ferner ein oder mehrere nicht dargestellte Verstelleinrichtungen aufweisen.

Beispielsweise kann das Gerät eine Neigungsverstelleinrichtung, mittels welcher die Neigung der Ausbringeinrichtungen 14 in Bezug auf das Verteilergestänge 12 zum Verändern der jeweiligen Ausbringrichtungen veränderbar ist, und/oder eine Neigungsverstelleinrichtung, mittels welcher die Neigung der Erfassungseinrichtungen 18 in Bezug auf das Verteilergestänge 12 zum Verändern der jeweiligen Erfassungsrichtungen veränderbar ist, umfassen.

Alternativ oder zusätzlich kann das Gerät 100 eine Positionsverstelleinrichtung, mittels welcher die Position der Ausbringeinrichtungen 14 in Bezug auf das Verteilergestänge 12 zum Verändern der Position der Ausbringbereiche 16 der jeweiligen Ausbringeinrichtungen 14 veränderbar ist, und/oder eine Positionsverstelleinrichtung, mittels welcher die Position der Erfassungseinrichtungen 18 in Bezug auf das Verteilergestänge 12 zum Verändern der Position der Erfassungsbereiche 20 der jeweiligen Erfassungseinrichtungen 18 veränderbar ist, umfassen.

Alternativ oder zusätzlich kann das Gerät 100 eine Abgabeverstelleinrichtung, mittels welcher die Ausbringrichtungen der jeweiligen Ausbringeinrichtungen 14, ohne eine Verstellung der Neigung und der Position der Ausbringeinrichtungen 14 veränderbar sind, und/oder eine Erfassungsverstelleinrichtung, mittels welcher die Erfassungsrichtungen der jeweiligen Erfassungseinrichtungen 18 ohne eine Verstellung der Neigung und der Position der Erfassungseinrichtungen 18 veränderbar sind, umfassen.

Wenn das Gerät 100 über eine oder mehrere Verstelleinrichtungen verfügt, kann die Steuerungseinrichtung 22 dazu eingerichtet sein, auf Grundlage des Zustands der Ausbringeinrichtungen 14, beispielsweise auf Grundlage von deren Neigung und/oder Position, und auf Grundlage des Zustands der Erfassungseinrichtungen 18, beispielsweise auf Grundlage von deren Neigung und/oder Position, eine maximale Fahrgeschwindigkeit zu ermitteln und ein Signal zur Begrenzung der Fahrgeschwindigkeit zu erzeugen. Alternativ oder zusätzlich kann Steuerungseinrichtung 22 dazu eingerichtet sein, auf Grundlage der aktuellen Fahrgeschwindigkeit einen geeigneten Zustand für die Ausbringeinrichtungen 14 und einen geeigneten Zustand für die Erfassungseinrichtungen 18 zu ermitteln und ein Signal zur Einstellung des ermittelten Zustands an den Ausbringeinrichtungen 14 und ein Signal zur Einstellung des ermittelten Zustands an den Erfassungseinrichtungen 18 zu erzeugen.

### Bezugszeichenliste

- 10: Ausbringsystem
- 12: Verteilergestänge
- 14, 14a-14g: Ausbringeinrichtungen
- 16, 16a-16g: Ausbringbereiche
- 18, 18a-18d: Erfassungseinrichtungen
- 20, 20a-20d: Erfassungsbereiche
- 22: Steuerungseinrichtung
- 24: Abstand

- 100: landwirtschaftliches Gerät
- 102: Vorratstank

- 200: Gerätekombination
- 202: Zugfahrzeug

- N: landwirtschaftliche Nutzfläche
- P: Pflanzenbestand

## Patentansprüche

1. Ausbringsystem (10) für ein landwirtschaftliches Gerät (100) zur Ausbringung von Flüssigkeiten, insbesondere für eine landwirtschaftliche Feldspritze, mit
- einem Verteilergestänge (12),
- mehreren Ausbringeinrichtungen (14, 14a-14g), welche jeweils an dem Verteilergestänge (12) angeordnet und dazu eingerichtet sind, Flüssigkeit auf eine landwirtschaftliche Nutzfläche (N) auszubringen,
- mehreren Erfassungseinrichtungen (18, 18a-18d), welche dazu eingerichtet sind, Zustandsinformationen zu der landwirtschaftlichen Nutzfläche (N) zu erfassen, und
- einer Steuerungseinrichtung (22), welche dazu eingerichtet ist, die Ausbringung der Flüssigkeit durch die Ausbringeinrichtungen (14, 14a-14g) in Abhängigkeit der durch die Erfassungseinrichtungen (18, 18a-18d) erfassten Zustandsinformationen zu der landwirtschaftlichen Nutzfläche (N) zu steuern;
**dadurch gekennzeichnet, dass** die Ausbringeinrichtungen (14, 14a-14g) dazu eingerichtet sind, die Flüssigkeit schräg nach unten abzugeben.

2. Ausbringsystem (10) nach Anspruch 1,
**dadurch gekennzeichnet, dass** die Ausbringeinrichtungen (14, 14a-14g) jeweils einen Ausbringbereich (16, 16a-16g) und die Erfassungseinrichtungen (18, 18a-18d) jeweils einen Erfassungsbereich (20, 20a-20d) aufweisen, wobei die Erfassungsbereiche (20, 20a-20d) in Fahrtrichtung vor den Ausbringbereichen (16, 16a-16g) angeordnet sind.

3. Ausbringsystem (10) nach Anspruch 2,
**dadurch gekennzeichnet, dass** das Verteilergestänge (12) dazu eingerichtet ist, sich im ordnungsgemäßen Betrieb quer zur Fahrtrichtung zu erstrecken, wobei die Erfassungseinrichtungen (18, 18a-18d) derart angeordnet und ausgebildet sind, dass die Erfassungsbereiche (20, 20a-20d) in Fahrtrichtung vor dem Verteilergestänge (12) angeordnet sind.

4. Ausbringsystem (10) nach Anspruch 2 oder 3,
**dadurch gekennzeichnet, dass** das Verteilergestänge (12) dazu eingerichtet ist, sich im ordnungsgemäßen Betrieb quer zur Fahrtrichtung zu erstrecken, wobei die Ausbringeinrichtungen (14, 14a-14g) derart angeordnet und ausgebildet sind, dass die Ausbringbereiche (16, 16a-16g) in Fahrtrichtung hinter dem Verteilergestänge (12) angeordnet sind.

5. Ausbringsystem (10) nach einem der vorstehenden Ansprüche,
**dadurch gekennzeichnet, dass** die Ausbringeinrichtungen (14, 14a-14g) schräg nach unten und vorzugsweise gegen die Fahrtrichtung nach hinten geneigt ausgerichtet sind.

6. Ausbringsystem (10) nach einem der vorstehenden Ansprüche,
**dadurch gekennzeichnet, dass** jeweils eine oder mehrere Ausbringeinrichtungen (14, 14a-14g) an einer Spritzleitung des Verteilergestänges (12) ausgebildet sind, wobei eine oder mehrere Spritzleitungen derart ausgerichtet sind, dass die Ausbringeinrichtungen (14, 14a-14g) die Flüssigkeit schräg nach unten abgeben.

7. Ausbringsystem (10) nach einem der vorstehenden Ansprüche,
**dadurch gekennzeichnet, dass** die Ausbringeinrichtungen (14, 14a-14g) jeweils ein oder mehrere Mundstücke aufweisen, wobei die Mundstücke jeweils derart geneigt ausgerichtet sind, dass die Ausbringeinrichtungen (14, 14a-14g) die Flüssigkeit schräg nach unten abgeben.

8. Ausbringsystem (10) nach einem der vorstehenden Ansprüche,
**dadurch gekennzeichnet, dass** die Erfassungseinrichtungen (18, 18a-18d) schräg nach unten und vorzugsweise in Fahrtrichtung nach vorne geneigt ausgerichtet sind.

9. Ausbringsystem (10) nach einem der vorstehenden Ansprüche,
**gekennzeichnet durch** eine Neigungsverstelleinrichtung, mittels welcher die Neigung der Ausbringeinrichtungen (14, 14a-14g) in Bezug auf das Verteilergestänge (12) zum Verändern der jeweiligen Ausbringrichtungen veränderbar ist.

10. Ausbringsystem (10) nach einem der vorstehenden Ansprüche,
**gekennzeichnet durch** eine Positionsverstelleinrichtung, mittels welcher die Position der Ausbringeinrichtungen (14, 14a-14g) in Bezug auf das Verteilergestänge (12) zum Verändern der Position der Ausbringbereiche (16, 16a-16g) der jeweiligen Ausbringeinrichtungen (14, 14a-14g) veränderbar ist.

11. Ausbringsystem (10) nach einem der vorstehenden Ansprüche,
**gekennzeichnet durch** eine Abgabeverstelleinrichtung, mittels welcher die Ausbringrichtungen der jeweiligen Ausbringeinrichtungen (14, 14a-14g) ohne eine Verstellung der Neigung und/oder der Position der Ausbringeinrichtungen (14, 14a-14g) veränderbar sind.

12. Ausbringsystem (10) nach einem der vorstehenden Ansprüche,
**dadurch gekennzeichnet, dass** die Steuerungseinrichtung (22) dazu eingerichtet ist, auf Grundlage des Zustands der Ausbringeinrichtungen (14, 14a-14g) und/oder des Zustands der Erfassungseinrichtungen (18, 18a-18d) eine maximale Fahrgeschwindigkeit zu ermitteln und/oder ein Signal zur Begrenzung der Fahrgeschwindigkeit zu erzeugen.

13. Ausbringsystem (10) nach einem der vorstehenden Ansprüche,
**dadurch gekennzeichnet, dass** die Steuerungseinrichtung (22) dazu eingerichtet ist, auf Grundlage einer Fahrgeschwindigkeit, insbesondere der aktuellen Fahrgeschwindigkeit, einen geeigneten Zustand für die Ausbringeinrichtungen (14, 14a-14g) und/oder einen geeigneten Zustand für die Erfassungseinrichtungen (18, 18a-18d) zu ermitteln und vorzugsweise ein Signal zur Einstellung des ermittelten Zustands an den Ausbringeinrichtungen (14, 14a-14g) und/oder ein Signal zur Einstellung des ermittelten Zustands an den Erfassungseinrichtungen (18, 18a-18d) zu erzeugen.

14. Landwirtschaftliches Gerät (100) zur Ausbringung von Flüssigkeiten, insbesondere Feldspritze, mit
- einem Vorratstank (102), welcher dazu eingerichtet ist, eine auszubringende Flüssigkeit zu bevorraten, und
- einem Ausbringsystem (10), dessen Ausbringeinrichtungen (14, 14a-14g) fluidleitend mit dem Vorratstank (102) verbunden sind,
**dadurch gekennzeichnet, dass** das Ausbringsystem (10) nach einem der vorstehenden Ansprüche ausgebildet ist.
